# EUROPÄISCHE PATENTANMELDUNG

(11) **EP 3 822 201 A1**
(43) Veröffentlichungstag der Anmeldung: **19.05.2021**
(21) Anmeldenummer: 19208427.5
(22) Anmeldetag: 12.11.2019
(51) Int. Cl.: B65G 47/84

(54) **FÖRDERVORRICHTUNG UND VERFAHREN ZUM SORTIEREN VON STÜCKGÜTERN**

(71) Anmelder: Siemens Aktiengesellschaft, 80333 München (DE)
(72) Erfinder: ASCHPURWIS, Carsten, 78464 Konstanz (DE)
(74) Vertreter: Maier, Daniel Oliver

(57) **Zusammenfassung**

Im Postbereich treten große Stückgutgrößen-Bandbreite auf. Kleine, leichte Stückgüter reagieren empfindlich auf Richtungs- und Beschleunigungsänderungen. Es resultiert unkontrollierte Positionsänderung und somit inkorrektes Tracking und Fehlsortierung. Die Erfindung offenbart eine Vorrichtung (2) und ein Verfahren zum Sortieren von Stückgütern (4). Die Vorrichtung umfasst eine Förderfläche (6), entlang der Förderfläche (6) und einer Hauptförderrichtung (10) aufeinanderfolgend angeordnete, mit einem Obertrum (8) laufende und entlang einer Förderstreckensegment-Längsachse (14) auf dem Förderstreckensegments (12) bewegbare Abschiebeelemente (16).

Ein Stückgut (4) wird auf mindestens einem Förderstreckensegment (12) längs entlang der Hauptförderrichtung (10) transportiert. Das Stückgut (4) wird durch ein mit dem Obertrum (8) laufendes Abschiebeelement (16) entlang einer Ausschleusrichtung (18) hin zu einer Endstelle (20) ausgeschleust, indem das Abschiebeelement (16) entlang der Förderstreckensegment-Längsachse (14) von einer ersten (18.1) hin zu einer zweiten Förderstreckensegment-Seite (18.2) bewegt wird.

Die Förderstreckensegmente (12) weisen auf ihrer Oberfläche entlang der Förderstreckensegment-Längsachse (14) ein Förderstreckensegment-Profil (24) mit einer Vertiefung (22) auf.

## Beschreibung

Die vorliegende Erfindung bezieht sich auf das technische Gebiet einer Fördervorrichtung zum Sortieren von Stückgütern.

Insbesondere im Bereich der Post- und Paketsortierung gab es im Mixed-Mail-Bereich in den letzten Jahren eine starke Zunahme von Sendungen stark unterschiedlicher Größe, denn bedingt durch die Zunahme des automatisierten Versands gibt es immer weniger Konsolidierung versendeter Güter. Häufig sind diese Güter mangelhaft verpackt (beweglicher Schwerpunkt innerhalb der Verpackung, empfindliches Verpackungsmaterial, ...), so dass ein ständiges Hin- und Herschieben die Gefahr von Beschädigung des Stückguts, seiner Verpackung und der Fördervorrichtung erhöht. Durch die starke Zunahme des Paketvolumens aufgrund des Versandhandels ist diese Problematik von hoher Bedeutung für die Effizienz und Zuverlässigkeit der gesamten Versandkette.

Im Bereich der Postsortierung kommen häufig Schuhsorter zum Einsatz, deren Durchsatz relativ unabhängig von der Stückgutgröße stückzahlbezogen ist. Schuhsorter sind bisher meist auf größere Stückgüter ausgelegt. Größere Stückgüter reagieren aufgrund ihrer trägen Masse weniger empfindlich auf bei Ausschleusungen auf Endstellen typischerweise auftretende Richtungs- und Beschleunigungsänderungen. Kleinere und unregelmäßige Stückgüter rollen leichter weg, haben häufig einen verschieblichen Schwerpunkt, was die Problematik eines unkontrollierten Verschiebens während des Transports, insbesondere während des Ausschleusens, verstärkt.

Ein unkontrolliertes Verschieben und Rutschen passiert besonders leicht, wenn ein Paket nicht von Anfang an am Schuh anliegt, denn dann wird das Paket beim ersten Kontakt zwischen Schuh und Paket mit einer Geschwindigkeit stoßartig beschleunigt und das Paket kann unkontrolliert auf der Förderfläche rutschen. Diese Problematik tritt auch bei anderen Fördervorrichtungen auf und ist nicht nur auf Schuhsorter beschränkt. Bei leichten und/oder kleinen Stückgütern müssen für eine Ausschleusung nur ein oder zwei Schuhe bewegt werden, so dass eine geringe Fehlertoleranz besteht. Die Stückgüter können u.U. über die Schuhe springen. Wenn das Stückgut nach vorne oder hinten verschoben wird, befindet es sich außerhalb des Einflussbereichs des zum Ausschleusen vorgesehenen Schuhs, so dass das Stückgut folglich nicht oder an falscher Position, evtl. gemeinsam mit einem anderen Stückgut, ausgeschleust wird.

Wenn Stückgüter ihre Position selbstständig verschieben, kann daher korrektes Routing nicht mehr garantiert werden, wodurch es beim Abschieben/Abwerfen zu Fehlern und Störungen kommen kann und Fehlsortierung resultiert. Daher ist es wichtig, dass Stückgüter in Förderrichtung in Position gehalten werden. Stand der Technik zur Problemlösung ist Handsortierung oder Transport kritischer, meist kleiner und leichter Stückgüter in speziellen rezirkulierenden Schalen, in denen diese kritischen Stückgüter gegebenenfalls sogar mit einem Gummi fixiert werden. Vorteilhaft ist es, wenn die kritischen Stückgüter auf dem Weg von der Vereinzelung bis zum Ziel möglichst wenige Funktionen durchlaufen, die ihre Position unkontrolliert beeinflusst. Die oben beschriebenen Lösungen erfüllen dieses Kriterium nicht, sind aufwendig und somit unwirtschaftlich.

Der vorliegenden Erfindung liegt daher die Aufgabe zugrunde, eine verbesserte Lösung der beschriebenen Problematik zu ermöglichen. Diese Aufgabe wird durch die in den unabhängigen Ansprüchen beschriebenen Lösungen gelöst.

Die erfindungsgemäße Lösung sieht eine Vorrichtung zum Sortieren von gleich und/oder unterschiedlich dimensionierten Stückgütern vor. Die Vorrichtung umfasst eine Förderfläche, die längs entlang einer Hauptförderrichtung eines Obertrums läuft, wobei die Förderfläche Förderstreckensegmente aufweist, die entlang der Hauptförderrichtung aufeinanderfolgend angeordnet sind und in einem ersten Winkel, typischerweise quer, zur Hauptförderrichtung angeordnete Förderstreckensegment-Längsachsen aufweisen. Die Vorrichtung umfasst zudem entlang der Förderfläche und entlang der Hauptförderrichtung aufeinanderfolgend angeordnete, mit dem Obertrum laufende Abschiebeelemente, die entlang der Förderstreckensegment-Längsachse von einer ersten Seite hin zu einer zweiten Seite eines Förderstreckensegments auf diesem bewegbar sind um ein Stückgut entlang einer Ausschleusrichtung zu einer Endstelle hin zu bewegen. Die Förderstreckensegmente weisen auf ihrer Oberfläche entlang der Förderstreckensegment-Längsachse ein Förderstreckensegment-Profil mit einer Vertiefung auf.

Vorteilhafte Ausgestaltungen der Erfindung ergeben sich aus den Unteransprüchen.

Durch die Profilierung ist das Stückgut wie in einem Trog gefangen und kann nicht in bzw. entgegen der Hauptförderrichtung von dem Förderstreckensegment rutschen. Wenn das Stückgut nun von dem Abschiebeelement entlang der Förderstreckensegment-Längsachse bewegt wird, läuft es wie ein Rakel auf der Oberfläche des Förderstreckensegments entlang. Dadurch dass sich Stückgut bei Querverschiebung muldenartig in dem Förderstreckensegment-Profil hält, wird ein unkontrolliertes Rutschen in bzw. entgegen der Hauptförderrichtung verhindert und es resultiert so eine höhere Betriebssicherheit.

Unter einer Förderfläche soll insbesondere eine Förderstrecke verstanden werden, die ohne größere Lücken hauptsächlich von den Förderstreckensegmenten aufgespannt wird. Größere Stückgüter können so auf mehreren Förderstreckensegmenten zugleich aufliegen und ihre Transportrichtung, die ungestört entlang der Hauptförderrichtung verläuft, kann von mehreren Abschiebeelementen einzeln oder zugleich entlang der Ausschleusrichtung manipuliert werden. Kleinere bzw. schmalere Stückgüter liegen auf nur einem Förderstreckensegment auf, genauer in der Vertiefung und werden von dieser so fixiert, dass ein Rutschen in bzw. entgegen der Hauptförderrichtung wirksam verhindert wird.

Die Dimensionierung der Förderstreckensegmente ist hinsichtlich der Höhe ihrer Vertiefung und der Breite und der Länge der Förderstreckensegmente an die von der Vorrichtung sortierten Stückgüter und an die Fördergeschwindigkeit angepasst. Ein großer Anwendungsbereich der erfindungsgemäßen Vorrichtung liegt im Postsortierbereich, sie kann jedoch auch in anderen Bereichen für sehr viel kleinere und sehr viel größere Stückgüter herangezogen werden.

Die Abschiebeelemente liegen oberhalb der Förderstreckensegmente derart, dass kein nennenswerter Spalt vorliegt, in den Stückgüter fallen oder in dem sie sich verfangen können. Die Abschiebeelemente können gleitend oder gleitartig auf den Förderstreckensegmenten aufliegend entlang der Förderstreckensegment-Längsachse bewegt werden. Die Abschiebeelemente und die Förderstreckensegmente bewegen sich gemeinsam entlang der Hauptförderrichtung, so dass eine Bewegung entlang der Ausschleusrichtung hin zu einer Endstelle resultiert, wenn das Stückgut zusätzlich entlang der Förderstreckensegment-Längsachse bewegt wird, um es auszuschleusen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform ist die Vorrichtung als Schuhsorter ausgestaltet.

Um ein Stückgut schonend zu bewegen und sicher zu erfassen, kann ein Abschiebeelement jeweils ein Förderstreckensegment abdecken. Dies bedeutet, dass sich ein Abschiebeelement über die gesamte Breite des Förderstreckensegments erstreckt und somit ein auf dem Förderstreckensegment aufliegendes Stückgut auf der gesamten Breite des Förderstreckensegments mit dem Abschiebeelement in Kontakt kommen und bewegt werden kann. Die Vorrichtung ist ausgestaltet, die Abschiebeelemente einzeln anzusteuern. So können auf einander nachfolgenden Förderstreckensegmenten Stückgüter transportiert und diese dann dennoch auf unterschiedliche Endstellen ausgeschleust werden.

Gemäß einer Ausführungsform kann das Abschiebeelement eine Oberfläche aufweisen, die passgenau an das Förderstreckensegment-Profil geformt ist. Die Oberfläche der Unterseite des Abschiebeelements ist also passgenau geformt an die Vertiefung des Förderstreckensegments bzw. an das Förderstreckensegment-Profil ausgestaltet, so dass das Abschiebeelement auf der Oberfläche des Förderstreckensegments aufliegend entlang der Förderstreckensegment-Längsachse gleitend bewegbar ist. Das Abschiebeelement ist ausgestaltet, ein auf dem Förderstreckensegment aufliegendes Stückgut entlang der Förderstreckensegment-Längsachse zu schieben.

Gemäß einer weiteren Ausführungsform kann das Abschiebeelement genau eine oder mehrere Vertiefungen aufweisen. Der tiefste Punkt Vertiefungen kann auf gleicher und/oder unterschiedlicher Höhe angeordnet sein. Mehr als eine Vertiefung kann einen noch besseren Schutz gegen durch Rutschen verursachte ungewollte Positionsänderungen des Stückguts bieten.

Gemäß einer weiteren Ausführungsform kann die Vorrichtung zudem eine Spurführungsanordnung umfassen, die ausgestaltet ist, eine Bewegung der Abschiebeelemente entlang der Ausschleusrichtung zu bewirken. Die Art der Wechselwirkung der Abschiebeelement mit der Spurführungsanordnung, also ob die Abschiebeelemente entlang der Förderstreckensegment-Längsachse geführt werden oder nur gemeinsam mit den Förderstreckensegmenten auf diesen aufliegend entlang der Hauptförderrichtung bewegt werden, kann ansteuerbar geregelt werden. Das Abschiebeelemente wird von der Spurführungsanordnung zwangsgeführt, so dass ein Stückgut zur Endstelle befördert wird. Es sind mehrere Arten der Spurführung möglich. Unabhängig von der genauen Ausgestaltung ermöglicht die Spurführungsanordnung, die Bewegung der Abschiebeelemente anzusteuern, um ein Stückgut zur Endstelle hin auszuschleusen oder nicht.

Die Spurführungsanordnung kann weichenartig ausgestaltet sein, unterhalb des Obertrums angeordnet. Hierbei wird das Abschiebeelement unterhalb der Förderfläche des Obertrums von der Spurführungsanordnung über das Förderstreckensegment zwangsgeführt, während das Obertrum in der Hauptförderrichtung angetrieben wird. Die Wahl der Spurführung bestimmt die Bewegung der Abschiebeelemente, welche das Stückgut entlang der Ausrichtungen der Spurführungsanordnung bewegen, wobei eine Bewegung des Stückguts typischerweise entweder seitlich entlang der Ausschleusrichtung oder entlang der Hauptförderrichtung resultiert. Die resultierende Bewegung des Stückguts entsteht durch Kombination der Bewegung entlang der Ausrichtungen; also entlang der Hauptförderrichtung und zusätzlich - falls das Abschiebeelement entlang der Förderstreckensegment-Längsachse bewegt wird - entlang der Förderstreckensegment-Längsachse.

Die Spurführungsanordnung weist eine Führung entlang der Hauptförderrichtung und eine Führung entlang der Ausschleusrichtung auf. Bei Führung des Abschiebeelements entlang der Hauptförderrichtung läuft ein Abschiebelement einfach mit dem Obertrum entlang der Hauptförderrichtung und weist keine Bewegung relativ zum Förderstreckensegment auf, so dass insgesamt eine Bewegung des Stückguts entlang der Hauptförderrichtung resultiert. Alternativ wird ein Abschiebelement zusätzlich zur Bewegung mit dem Obertrum entlang der Hauptförderrichtung entlang der Förderstreckensegment-Längsachse bewegt, so dass insgesamt eine Bewegung des Stückguts entlang der Ausschleusrichtung resultiert.

Die Spurführungsanordnung kann auch ausgestaltet sein als eine Vielzahl von dritten Rollen, die so angeordnet sind, dass sie sich um dritte Achsen drehen, die unter einem dritten Winkel relativ zur Hauptförderrichtung liegen, wobei die Vielzahl der dritten Rollen in parallelen, dritten Längsspuren angeordnet sind.

Eine selektive Ansteuerung der Spurführungsanordnung muss in jedem Fall gegeben sein um das Ausschleusen von Stückgütern gezielt steuern zu können. Wenn ein großes Stückgut auf mehreren Förderstreckensegmenten aufliegt, muss eine koordinierte Ansteuerung einander nachfolgender Abschiebeelementen möglich sein.

Gemäß einer weiteren Ausführungsform kann das Abschiebeelement eine oberhalb der Förderfläche liegende Oberseite und eine unterhalb der Förderfläche liegende Unterseite aufweisen, wobei die Unterseite ausgestaltet ist, derart mit der Spurführungsanordnung zu wechselwirken, dass eine Ablenkung des Abschiebeelements resultiert. Ein abgelenktes Abschiebeelement bewirkt eine Ablenkung des auf dem entsprechenden Förderstreckensegment aufliegenden Stückguts. Die Ablenkung kann durch weichenartige Führungsschienen bewirkt werden. Oder ein von der Spurführungsanordnung umfasstes und von ihr geführtes Element kann zur magnetischen Wechselwirkung mit dem Abschiebeelement ausgestaltet sein. Auch andere Ausgestaltungen sind möglich.

Gemäß einer Ausführungsform kann die Spurführungsanordnung wenigstens eine entlang der Hauptförderrichtung angeordnete Hauptspur und wenigstens eine entlang der Ausschleusrichtung angeordnete Ausschleusspur aufweisen. Das Abschiebeelement oder seine Unterseite, beispielsweise ausgestaltet als Führungszapfen oder die Spuren umfassende Vorrichtung, wird dann von der Hauptspur oder von der Ausschleusspur geführt. Eine Endstelle wird am Ende der wenigstens einen Ausschleusspur angeordnet. Es ist möglich, mehrere Ausschleusspuren zu realisieren, so dass mehrere Endstellen auf einer und/oder auf beiden Seiten der Förderfläche angeordnet werden können. Mehrere Ausschleusspuren können angeordnet werden hintereinander entlang der Hauptförderrichtung und/oder gespiegelt an einer Achse entlang der Hauptförderrichtung, wobei die Vorrichtung hierbei auf beiden Seiten der Förderfläche eine Hauptspur aufweisen sollte. Abschiebeelemente sind vor dem Ausschleusen immer auf der der Endstelle, auf welche abgeworfen werden soll, gegenüberliegenden Seite des Förderstreckensegments angeordnet. Die Abschiebeelemente müssen daher vor dem Belegen der Förderfläche mit Stückgütern auf die erste bzw. zweite Seite der Förderstreckensegmente positioniert werden, was vorzugsweise im Untertrum durchgeführt wird.

Gemäß einer Ausführungsform kann die Vertiefung der Förderstreckensegmente konkav oder spitz geformt sein. Die genaue Form des Förderstreckensegment-Profils ist rein durch die Funktion und die typischerweise von der Vorrichtung sortierten Stückgüter getrieben.

Gemäß einer weiteren Ausführungsform kann das Abschiebeelement das Förderstreckensegment seitlich ganz oder teilweise umschließen und/oder das Förderstreckensegment einen Schlitz längs der Förderstreckensegment-Längsachse zur Einfügung des Abschiebeelements aufweisen. So weist das Abschiebeelement eine oberhalb des Förderstreckensegments angeordnete Oberseite auf und kann zudem eine unterhalb des Förderstreckensegments angeordnete Unterseite aufweisen. Das Abschiebeelement kann entweder das Förderstreckensegment von oben nach unten und von hinten nach vorne umgeben, oder das Abschiebeelement ist mit einem Fortsatz versehen, der sich durch einen durch das Förderstreckensegment von oben nach unten gebildeten Querschlitz erstreckt. So kann das Abschiebeelement unterhalb der Förderfläche mechanisch geführt werden.

Hinsichtlich eines Verfahrens wird die vorstehend genannte Aufgabe gelöst durch ein Verfahren zum Sortieren von gleich und/oder unterschiedlich dimensionierten Stückgütern, umfassend die Verfahrensschritte:
a) Transport eines Stückguts aufliegend auf mindestens einem Förderstreckensegment einer Förderfläche längs entlang einer Hauptförderrichtung eines Obertrums, wobei die Förderfläche entlang der Hauptförderrichtung aufeinanderfolgend angeordnete Förderstreckensegmente aufweist.
b) Ablenken des Stückguts durch mindestens ein mit dem Obertrum laufendes Abschiebeelement, indem das Abschiebeelement entlang einer Förderstreckensegment-Längsachse von einer ersten Seite hin zu einer zweiten Seite des Förderstreckensegments bewegt wird, wodurch ein Bewegen des Stückguts entlang einer Ausschleusrichtung hin zu einer Endstelle resultiert. Das Förderstreckensegment weist auf seiner Oberfläche entlang der Förderstreckensegment-Längsachse ein Förderstreckensegment-Profil mit einer Vertiefung auf. So kann ein kleines Stückgut mit geringerer Dimensionierung (Breite oder Länge) als die Breite des Förderstreckensegments in der Vertiefung liegen und so von dieser Vertiefung fixiert werden. Die Dimensionierung der Förderstreckensegmente ist hinsichtlich der Höhe und genauen Ausgestaltung der Vertiefung und der Breite der Förderstreckensegmente an die von der Vorrichtung zu sortierenden Stückgüter und die Fördergeschwindigkeit angepasst.

Gemäß einer Ausführungsform kann ein Abschiebeelement so dimensioniert sin, dass die gesamte Breite des Förderstreckensegments quer zu der Förderstreckensegment-Längsachse abgedeckt ist. So kann ein auf dem Förderstreckensegment aufliegendes Stückgut auf der gesamten Breite des Förderstreckensegments von dem Abschiebeelement geschoben werden.

Gemäß einer weiteren Ausführungsform kann ein Bewegen des Abschiebeelements auf dem Förderstreckensegment aufliegend erfolgen. Der Raum zwischen Abschiebeelement und Förderstreckensegment weist hierbei keine wesentlichen Lücken auf.

Gemäß einer weiteren Ausführungsform kann ein Führen einer Bewegung des Abschiebeelements entlang der Ausschleusrichtung oder entlang der Hauptförderrichtung erfolgen. Die Bewegung entlang der Ausschleusrichtung kommt zustande durch Überlagerung von Bewegungen entlang der Förderstreckensegment-Längsachse und entlang der Hauptförderrichtung.

Ausführungsformen der Erfindung werden nachfolgend anhand der Figuren beispielsweise näher erläutert. Dabei zeigen:
- Figur 1: eine erfindungsgemäße Vorrichtung in Aufsicht und seitlicher Ansicht;
- Figur 2: eine Spurführungsanordnung von oben;
- Figur 3: in Aufsicht eine Vorrichtung beidseitig angeordneten Endstellen und zugehörigen Ausschleusspuren;
- Figur 4: einen Ausschleusvorgang.

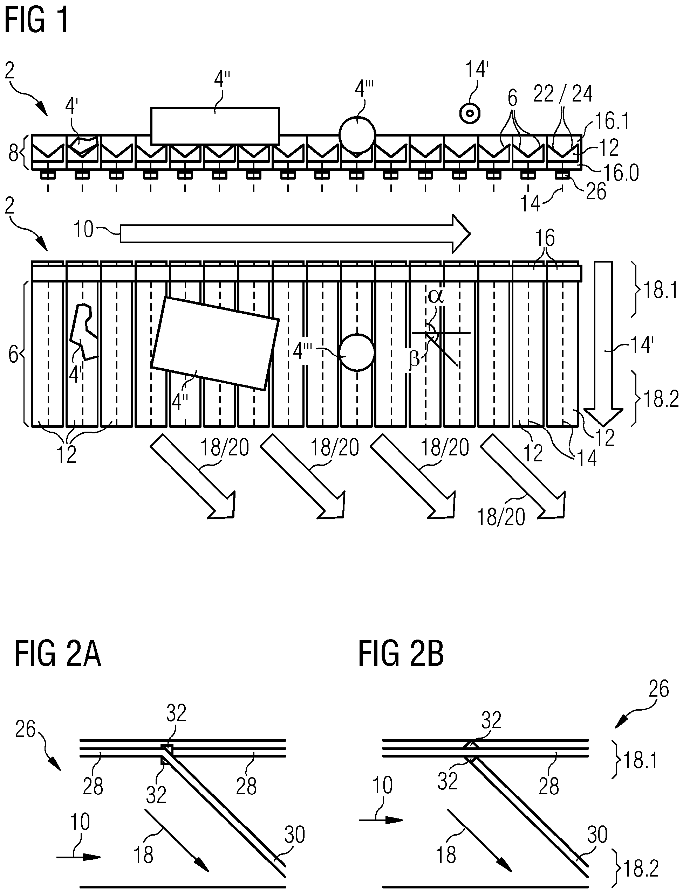

Figur 1 zeigt eine Vorrichtung 2 in Aufsicht (unten) und seitlicher Ansicht (oben) gemäß einer Ausführungsform der Erfindung. Die Vorrichtung 2 weist eine Förderfläche 6 auf, die von Förderstreckensegmenten 12 aufgespannt wird. Die Vorrichtung 2 umfasst genauso viele Abschiebeelemente 16 wie Förderstreckensegmente 12, wobei ein Abschiebeelement 16 sich jeweils über die gesamte Breite eines Förderstreckensegments 12 erstreckt. Die Vorrichtung 2 weist ein Obertrum 8 auf, umfassend mindestens die Förderstreckensegmente 12 und die Abschiebeelemente 16. Das Obertrum 8 weist als Laufrichtung eine Hauptförderrichtung 10 auf. Die Förderstreckensegmente 12 weisen ein Förderstreckensegment-Profil 24 mit einer Vertiefung 22 auf. Die Vertiefung 22 ist hinreichend prominent gewählt um ein Rutschen eines Stückguts 4 zu verhindern. Eine Vertiefung, die nur die Aufgabe hat, zu verhindern, dass die Vorderkante eines Abschiebeelements 16 unter die Tangentialfläche greift, so dass verhindert wird, dass ein Abschiebeelement über ein flaches Stückgut 4 überfährt, ist nicht ausreichend, um ein Rutschen eines Stückguts 4 zu verhindern.

Die Förderstreckensegment-Profile 24 bilden die Förderfläche 6 aus. Die oberhalb der Förderfläche liegende untere Oberfläche der Oberseite 16.1 des Abschiebeelements 16 sind an das Förderstreckensegment-Profil 24 angepasst geformt, so dass zwischen den Oberseiten 16.1 der Abschiebeelemente 16 und den Förderstreckensegmenten 12 keine wesentlichen Lücken auftreten. Die Abschiebeelemente 16 weisen eine unterhalb der Förderfläche 6 liegende Unterseite 16.0 auf, die zur Wechselwirkung mit einer Spurführungsanordnung 26 ausgestaltet ausgebildet sind. Die Kontur der Abschiebeelemente 16 ist angepasst an die Form der Förderstreckensegment-Profile 24, beide weisen eine Abschiebeschuhkontur (Positiv und Negativ) auf

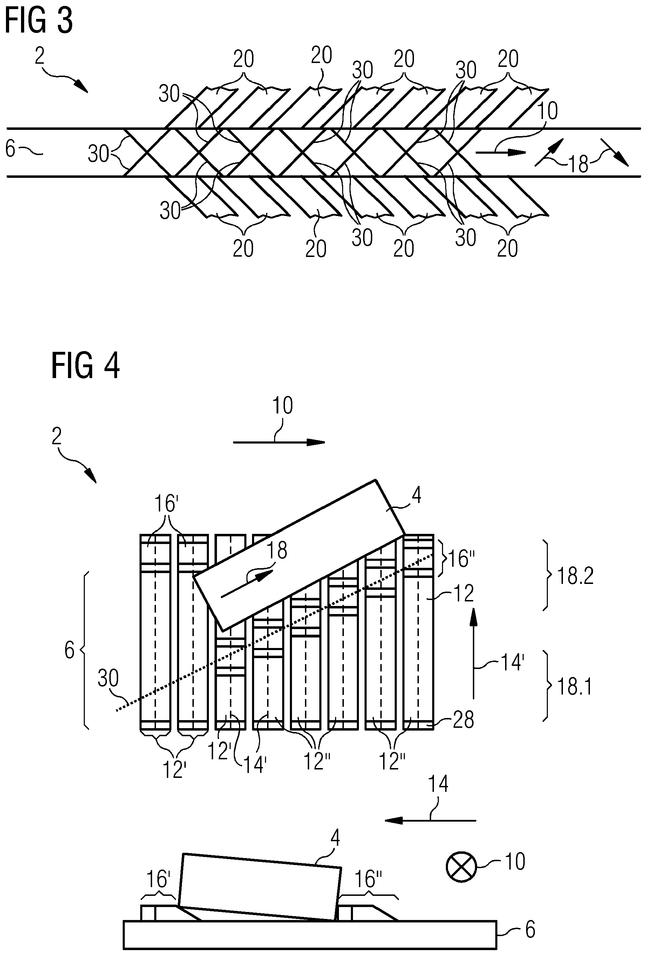

Die Förderstreckensegmente 12 sind lamellenartig ausgestaltet und weisen Förderstreckensegment-Längsachsen 14 auf. Die Abschiebeelemente 16 weisen eine Laufrichtung 14' entlang der Förderstreckensegment-Längsachsen auf. Um ein Stückgut 4 hin zu einer Endstelle 20 zu befördern, werden je nach Dimensionierung des Stückguts 4 ein oder mehrere Abschiebeelemente 16 von der ersten Seite 18.1 hin zu einer zweiten Seite 18.2 des Förderstreckensegments 12 bewegt, wie in Figur 4 gezeigt. Hierbei werden das eine oder die mehreren Abschiebeelement 16 von der unterhalb der Förderfläche 6 angeordneten Spurführungsanordnung 26 zwangsgeführt.

Normalerweise umgibt das Abschiebelement 16, welches ein Schuh in einem Schuhsorter sein kann, entweder das Förderstreckensegment 12 von oben nach unten und von hinten nach vorne, oder das Abschiebeelement 16 ist mit einem Fortsatz versehen, der sich durch einen durch das Förderstreckensegment 12 von oben nach unten gebildeten Querschlitz erstreckt. Eine im Förderrahmen unter dem Förderband 8 angeordnete Spurführungsanordnung 26 führt die Abschiebelement 16 über das Förderband 8, wenn das Förderband 8 in der Hauptförderrichtung 10 angetrieben wird. Der Fortsatz kann beispielsweise umfassen ein Rad und ein stiftartiges Element zur Wechselwirkung mit der Spurführungsanordnung 26.

Die Führung erfolgt entweder derart, dass die Abschiebeelemente 16 mit dem Obertrum 8 entlang der Hauptförderrichtung 10 laufen oder zusätzlich entlang der Förderstreckensegment-Längsachsen 14 bewegt werden, so dass durch Überlagerung der Bewegung entlang der Hauptförderrichtung 10 und entlang der Förderstreckensegment-Längsachse 14 insgesamt eine Bewegung entlang der Ausschleusrichtung 18 hin zu einer Endstelle 20 resultiert.

Hauptförderrichtung 10 und Förderstreckensegment-Längsachsen 14 schließen einen ersten Winkel α ein. Ausschleusrichtung 18 und Hauptförderrichtung 10 schließen einen zweiten Winkel β ein. Eine typische Realisierung findet die Vorrichtung 2 als Schuhsorter. Das Endlosförderband eines Schuhsorters bildet Obertrum 8 und Untertrum aus, die beweglich angebrachten Abschiebeelemente 16 sind die Schuhe und dienen dazu, Stückgüter über das Förderband hin zu einer Endstelle 20 zu schieben. Die Förderstreckensegmente 12 sind die Lamellen 12 eines Schuhsorters. Wenn auf einem Schuhsorter nur große und schwere Stückgüter 12 transportiert werden, ist der Vorteil von Vertiefungen 22 aufweisende Lamellen 12 sehr überschaubar.

Kleine Stückgüter 4', 4''' liegen in der Vertiefung 22 und auf nur einem Förderstreckensegment 12 auf. Ein größeres Stückgut 4" liegt auf mehreren Förderstreckensegmenten 12 auf, auf den höchsten Punkten, also den Rändern der Förderstreckensegmente 12. Ein Abschiebeelement 16 ist zunächst auf einer ersten Seite 18.1 der Förderstreckensegmente 12 angeordnet. In Figur 1 befinden sich noch alle Abschiebeelemente 16 in ihrer Ursprungsposition. Ein Stückgut 4 wird zunächst auf der Förderfläche 6 aufliegend entlang der Hauptförderrichtung 10 transportiert. Um ein Stückgut 4 hin zu einer Endstelle 20 entlang einer Ausschleusrichtung 18 zu bewegen, werden diejenigen Abschiebelemente 16 angesteuert, die auf den Förderstreckensegmenten 14 liegen, auf denen auch das auszuschleusende Stückgut 4 aufliegt. Die Anzahl der anzusteuernden Abschiebeelemente 16 entspricht daher der Anzahl der Förderstreckensegmente 12, auf denen das Stückgut 4 aufliegt.

Gemäß einer Sortiervorgabe, bestimmt beispielsweise durch die Zieladresse, wird das Stückgut 4 einer bestimmten Endstelle 20 zugeordnet. Diese Endstelle 20 ist am Ende einer Ausschleusspur 30 der Spurführungsanordnung 26 angeordnet. Mindestens ein auf der ersten Seite 18.1 der Förderfläche 6 angeordnetes Abschiebeelement 16 wird nun entlang der Ausschleusspur 30 der Spurführungsanordnung 26 geführt, indem es mit dem Obertrum 8 weiter entlang der Hauptförderrichtung 10 und zusätzlich entlang der Förderstreckensegment-Längsachse 14 bewegt wird, um das Stückgut 4 zur Endstelle hin entlang der Förderstreckensegment-Längsachsen 14 zu bewegen und auszuschleusen.

Die Bewegung der Abschiebeelemente 16 wird durch die Form und Ausgestaltung der Spurführungsanordnung 26 bestimmt, welche typischerweise eine Hauptspur 28 entlang der Hauptförderrichtung 10 und eine Ausschleusspur 30 im Wesentlichen entlang der Ausschleusrichtung 18 umfasst. Eine Führung der Abschiebeelemente 16 erfolgt mittels von der Spurführungsanordnung 26 umfassten Ablenkelemente 32. Um zu wissen, wann die Spurführungsanordnung 26 angesteuert werden muss, ist ein Tracking des Stückguts 4 erforderlich.

Figuren 2a, 2b zeigen gemäß einer weiteren Ausführungsform der Erfindung einen Ausschnitt einer Spurführungsanordnung 26 umfassend Hauptspur 28, Ausschleusspur 30 und Ablenkelemente 32. Die Ablenkelemente 32 sind ansteuerbar, so dass entweder eine Ablenkung eines oder mehrerer Abschiebeelemente 16 entlang der Ausschleusspur 30 (Figur 2a) oder wie in Figur 2b keine Ablenkung erfolgt und die Abschiebelemente 16 von der Hauptspur 28 geführt mit dem Obertrum nur entlang der Hauptförderrichtung 10 bewegt werden. Wenn die Ablenkelemente 32 wie in Figur 3a zur Abschiebelement-Ablenkung eingestellt sind, werden einander nachfolgende Abschiebeelemente 16 wie in Figur 4 gezeigt perlschnurartig entlang der Ausschleusspur 30 aufgereiht, so dass ein Stückgut 4 entlang der Ausschleusrichtung 18 bewegt wird. Sobald die Ablenkelemente 32 wieder umgestellt und wie in Figur 2b zur Führung der Abschiebeelemente 16 entlang der Hauptförderrichtung 10 eingestellt werden, bleiben nachfolgende Abschiebeelemente 16 an ihrer ursprünglichen Position.

Die Spurführungsanordnung 26 ist im Förderrahmen unter dem Förderband 8 angeordnet und führt die Abschiebeelemente 16 über die Förderfläche 8 wenn diese entlang der Hauptförderrichtung 10 angetrieben wird. Durch die besondere Anordnung der Spurführungsanordnung 26 wird das Stückgut 4 entlang der Ausrichtung einer Führungsvorrichtung 30 der Spurführungsanordnung 26 in bestimmte seitliche Positionen 20 geschoben.

Figur 3 zeigt gemäß noch einer weiteren Ausführungsform der Erfindung schematisch und in Aufsicht eine Vorrichtung 2 welche beidseitig angeordneten Endstellen 20 und die zugehörigen Ausschleusspuren 30 einer Spurführungsanordnung 26 umfasst.

Förderstreckensegmente 12 und Abschiebelemente 16 sind in Figur 3 der Übersichtlichkeit halber nicht dargestellt.

Figur 4 zeigt in Aufsicht (oben) und in seitlicher Ansicht (unten) einen Ausschleusvorgang eines größeren, da auf mehr als einem Förderstreckensegment 12 aufliegenden Stückguts 4 gemäß einer Ausführungsform der Erfindung. In der seitlichen Ansicht ist die Vertiefung 22 der Förderstreckensegmente 12 aufgrund der Perspektive nicht erkennbar, aber selbstverständlich dennoch vorhanden. Die Abschiebeelemente 12, die den zwei links liegenden Förderstreckensegmenten 12' zugeordnet sind, wurden bereits zum Ausschleusen eines Stückguts 4 hin auf die zweite Seite 18.2 der Förderstreckensegmente 12 bewegt. Die den weiteren Förderstreckensegmenten 12" zugeordneten Abschiebeelemente 16 manipulieren in Figur 4 die Position des gezeigten Stückguts 4 derart, dass es sich entlang der Ausschleusrichtung 18 bewegt.

Um die Position der Stückgüter 4 auf der Förderfläche 6 des Obertrums 8 besonders schonend zu manipulieren, ist die Form der Oberseite 16.1 der Abschiebeelemente 16 gemäß einer Ausführungsform wie unten in Figur 4 gezeigt leicht ansteigend ausgestaltet. Dies verhindert, dass ein auf mehr als einem Förderstreckensegment 12 aufliegendes Stückgut 4 zwischen zwei einander nachfolgenden Abschiebeelementen 16', 16" gequetscht und somit beschädigt wird. Stattdessen wird das Stückgut 4 von dem Abschiebeelement 16" auf das bereits auf der zweiten Seite 18.2 der Förderstreckensegmente 12' positionierte Abschiebeelement 16' geschoben.

Gemäß einer weiteren Ausführungsform ist die Ausschleusspur 30 auf der ersten Seite 18.1 der Förderstreckensegmente leicht kurvenförmig geformt und somit nicht über die komplette Länge entlang der Ausschleusrichtung angeordnet. Dies ermöglicht eine zunächst kurvenförmige Bewegung der Abschiebeelemente 16, was ein besonders sanftes Beschleunigen von Stückgütern 4 bewirkt.

Ein typischer Schuhsorter 2 umfasst ein Endlosförderband oder eine Endlosförderkette, bestehend aus einer Reihe von Gliedern 12, die von den Antriebsketten flankiert wird. An jedem Glied 12 ist jeweils ein Schuh 16 beweglich angebracht, der dazu dient, Produkte 4 über das Förderband zu schieben. Durch die besondere Anordnung der Spurführung wird das Fördergut 4 in bestimmte seitliche Positionen 18.2 auf dem Förderband geschoben.

Gemäß einer Ausführungsform befindet sich die Kulisse 26 immer unter der Endstelle 20. Das Ablenkelement 32 ist als bewegliches Element im Bereich der Abzweigung von Hauptspur 28 und Ausschleusspur 30 angeordnet. Wenn die Abschiebeelemente 16 nicht abgelenkt bzw. nicht aktiviert werden sollen, ist das Ablenkelement 32 dementsprechend eingestellt. Wenn die Abschiebeelemente 16 abgelenkt werden sollen, werden die Ablenkelemente 32 entsprechend eingestellt. Als Folge werden die Abschiebeelemente 16 entlang der Kulisse 26 ausgelenkt und laufen wie im Gänsemarsch entlang der Ausschleusspur 30 und schleusen das sich in ihrem Einflussbereich befindliche, also auf ihren Förderstreckensegmenten 12 aufliegende Stückgut 4 aus. Die Kulisse 26 ist aktivierbar.

Der erforderliche Abstand zwischen einander nachfolgenden, auf unterschiedliche Endstellen 20 auszuschleusenden Stückgütern 4 ist gering. Es muss nur gewährleistet sein, dass diese Stückgüter 4 auf unterschiedlichen Förderstreckensegmenten 12 aufliegen.

Die erfindungsgemäße Vorrichtung 2 und das erfindungsgemäße Verfahren eignet sich zum Sortieren und/oder Splitten von Stückgütern 4.

### Bezugszeichenliste

- 2: Vorrichtung
- 4: Stückgüter
- 6: Förderfläche
- 8: Obertrum
- 10: Hauptförderrichtung
- 12: Förderstreckensegment
- 14: Förderstreckensegment-Längsachsen
- 14': Bewegungsrichtung der Abschiebeelemente 16 entlang der Förderstreckensegment-Längsachse 14
- 16: Abschiebeelement
- 16.1: Oberseite des Abschiebeelements 16
- 16.0: Unterseite des Abschiebeelements 16
- 18: Ausschleusrichtung
- 18.1: erste Seite eines Förderstreckensegments 12
- 18.2: zweite Seite eines Förderstreckensegments 12
- 20: Endstelle
- 22: Vertiefung
- 24: Förderstreckensegment-Profil
- 26: Spurführungsanordnung
- 28: Hauptspur der Spurführungsanordnung 26
- 30: Ausschleusspur der Spurführungsanordnung 26
- 32: Ablenkelemente der Spurführungsanordnung 26
- α: erster Winkel (Hauptförderrichtung 10 - Förderstreckensegment-Längsachse 14)
- β: zweiter Winkel (Hauptförderrichtung 10 - Ausschleusrichtung 18)

## Patentansprüche

1. Vorrichtung (2) zum Sortieren von gleich und/oder unterschiedlich dimensionierten Stückgütern (4) umfassend
a) eine Förderfläche (6), die längs entlang einer Hauptförderrichtung (10) eines Obertrums (8) läuft, wobei die Förderfläche (6) Förderstreckensegmente (12) aufweist, die entlang der Hauptförderrichtung (10) aufeinanderfolgend angeordnet sind und in einem ersten Winkel (α), typischerweise quer, zur Hauptförderrichtung (10) angeordnete Förderstreckensegment-Längsachsen (14) aufweisen;
b) entlang der Förderfläche (6) und entlang der Hauptförderrichtung (10) aufeinanderfolgend angeordnete, mit dem Obertrum (8) laufende Abschiebeelemente (16), die entlang der Förderstreckensegment-Längsachse (14) von einer ersten Seite (18.1) hin zu einer zweiten Seite (18.2) eines Förderstreckensegments (12) auf diesem bewegbar sind um ein Stückgut (4) entlang einer Ausschleusrichtung (18) zu einer Endstelle (20) hin zu bewegen;
**dadurch gekennzeichnet, dass**
die Förderstreckensegmente (12) auf ihrer Oberfläche entlang der Förderstreckensegment-Längsachse (14) ein Förderstreckensegment-Profil (24) mit einer Vertiefung (22) aufweisen.

2. Vorrichtung nach Anspruch 1, **dadurch gekennzeichnet, dass** ein Abschiebeelement (16) jeweils ein Förderstreckensegment (12) abdeckt.

3. Vorrichtung nach einem der Ansprüche 1 bis 2, **dadurch gekennzeichnet, dass**
das Abschiebeelement (16) eine Oberfläche aufweist, die passgenau an das Förderstreckensegment-Profil (24) geformt ist.

4. Vorrichtung nach einem der Ansprüche 1 bis 3, **dadurch gekennzeichnet, dass**
das Abschiebeelement (16) genau eine oder mehrere Vertiefungen (22) aufweist.

5. Vorrichtung nach einem der Ansprüche 1 bis 4, zudem umfassend
eine Spurführungsanordnung (26), die ausgestaltet ist, eine Bewegung der Abschiebeelemente (16) entlang der Ausschleusrichtung (18) zu bewirken.

6. Vorrichtung nach Anspruch 5, **dadurch gekennzeichnet, dass** das Abschiebeelement (16) eine oberhalb der Förderfläche (6) liegende Oberseite (16.1) und eine unterhalb der Förderfläche (6) liegende Unterseite (16.0) aufweist, wobei die Unterseite (16.0) ausgestaltet ist, derart mit der Spurführungsanordnung (26) zu wechselwirken, dass eine Ablenkung des Abschiebeelements (16) resultiert.

7. Vorrichtung nach einem der Ansprüche 5 bis 6, **dadurch gekennzeichnet, dass**
die Spurführungsanordnung (26) wenigstens eine entlang der Hauptförderrichtung (10) angeordnete Hauptspur (28) und wenigstens eine entlang der Ausschleusrichtung (18) angeordnete Ausschleusspur (30) aufweist.

8. Vorrichtung nach einem der Ansprüche 1 bis 7, **dadurch gekennzeichnet, dass**
die Vertiefung (22) der Förderstreckensegmente konkav oder spitz geformt ist.

9. Vorrichtung nach einem der Ansprüche 1 bis 8, **dadurch gekennzeichnet, dass**
das Abschiebeelement (16) das Förderstreckensegment (12) seitlich ganz oder teilweise umschließt und/oder das Förderstreckensegment (16) einen Schlitz längs der Förderstreckensegment-Längsachse (14) zur Einfügung des Abschiebeelements (16) aufweist.

10. Verfahren zum Sortieren von gleich und/oder unterschiedlich dimensionierten Stückgütern (4), umfassend die Verfahrensschritte:
a) Transport eines Stückguts (4) aufliegend auf mindestens einem Förderstreckensegment (12) einer Förderfläche (6) längs entlang einer Hauptförderrichtung (10) eines Obertrums (8), wobei die Förderfläche (5) entlang der Hauptförderrichtung (10) aufeinanderfolgend angeordnete Förderstreckensegmente (12) aufweist;
b) Ablenken des Stückguts (4) durch mindestens ein mit dem Obertrum (8) laufendes Abschiebeelement (16), indem das Abschiebeelement (16) entlang einer Förderstreckensegment-Längsachse (14) von einer ersten Seite (18.1) hin zu einer zweiten Seite (18.2) des Förderstreckensegments (12) bewegt wird, wodurch ein Bewegen des Stückguts (4) entlang einer Ausschleusrichtung (18) hin zu einer Endstelle (20) resultiert;
**dadurch gekennzeichnet, dass**
das Förderstreckensegment (12) auf seiner Oberfläche entlang der Förderstreckensegment-Längsachse (14) ein Förderstreckensegment-Profil mit einer Vertiefung (22) aufweist.

11. Verfahren nach Anspruch 10, **dadurch gekennzeichnet, dass** ein Abschiebeelement (16) so dimensioniert ist, dass die gesamte Breite des Förderstreckensegments (12) quer zu der Förderstreckensegment-Längsachse (14) abgedeckt ist.

12. Verfahren nach einem der Ansprüche 10 bis 11, **gekennzeichnet durch**
Bewegen des Abschiebeelements (16) auf dem Förderstreckensegment (12) aufliegend.

13. Verfahren nach einem der Ansprüche 10 bis 12, zudem umfassend den Verfahrensschritt
Führen einer Bewegung des Abschiebeelements (16) entlang der Ausschleusrichtung (18) oder entlang der Hauptförderrichtung (10) .
